# EUROPEAN PATENT APPLICATION

(11) **EP 3 070 363 A1**
(43) Date of publication of application: **21.09.2016**
(21) Application number: 15159850.5
(22) Date of filing: 19.03.2015
(51) Int. Cl.: F16F 1/373, F16H 57/00

(54) **REDUCTION GEAR ARRANGEMENT FOR A VALVE ACTUATOR**

(71) Applicant: Esbe AB, 330 21 Reftele (SE)
(72) Inventor: Kårhammer, Martin, 330 12 FORSHEDA (SE)
(74) Representative: Awapatent AB

(57) **Abstract**

The present invention relates to a reduction gear arrangement (9) for a valve actuator (1), the reduction gear arrangement (9) comprising a first stationary shaft (11) and a gear wheel arrangement (13) pivotally mounted on said first stationary shaft (11), wherein the reduction gear arrangement (9) further comprises an elastic V-shaped elastic ring (23) mounted on said first stationary shaft (11) and arranged to bias said gear wheel arrangement (13).

## Description

### Field of the Invention

The present invention relates to a reduction gear arrangement for a valve actuator, the reduction gear arrangement comprising a first stationary shaft and a gear wheel arrangement pivotally mounted on said first stationary shaft.

### Background of the Invention

Typically, valve actuators in the low cost range are driven by synchronous motors via a reduction gear arrangement.

Such a valve actuator normally comprises a motor and a gear arrangement having a lightweight design. The gear arrangement is arranged to mesh with a valve stem rotating means for operation of a valve.

A drawback of such a valve actuator is that noise may arise during operation thereof.

### Summary of the Invention

It is an object of the present invention to overcome the above described drawback, and to provide an improved reduction gear arrangement for a valve actuator.

This and other objects that will be apparent from the following summary and description are achieved by a reduction gear arrangement according to the appended claims.

According to one aspect of the present disclosure there is provided a reduction gear arrangement for a valve actuator, the reduction gear arrangement comprising a first stationary shaft and a gear wheel arrangement pivotally mounted on said first stationary shaft, wherein the reduction gear arrangement further comprises an elastic V-shaped ring mounted on said first stationary shaft and arranged to bias said first gear wheel arrangement.

The reduction gear arrangement may be used in combination with a synchronous motor. In operation of a valve actuator driven by a synchronous motor via a gear arrangement shockwaves are generated due to stepwise rotation of the motor. Such shockwaves travels through the transmission and may cause resonances and noise if not damped. The elastic V-shaped ring of the reduction gear arrangement of the present disclosure biases the first gear wheel arrangement and thereby dampens shockwaves travelling through the gear wheel arrangement and, hence, reduces resonances and noise during operation of a valve actuator. By biasing the gear wheel arrangement using an elastic V-shaped ring noise may thus be significantly reduced, especially when the reduction gear arrangement comprises one or more plastic gear wheels. Due to the lightweight design, plastic gear wheels lack inertia and there is thus no or negligible mass-damping when lightweight wheels are used. The first gear wheel arrangement may, e.g., be arranged to be biased against a supporting surface of the actuator housing by the V-shaped ring.

A reduction gear arrangement according to the present disclosure thus enables a silent actuator having gear wheels made of a lightweight material, such as, e.g., plastic, i.e. gearwheels from a material which is considered to be cost-effective. Hence, a reduction gear arrangement having a gear arrangement of lightweight design without generating noise may be achieved.

According to one embodiment said elastic V-shaped ring is fixedly mounted on said first stationary shaft, which enables a very easy installation of the V-shaped ring. Furthermore, it enables an arrangement having few parts.

According to one embodiment said first gear wheel arrangement comprises at least one plastic gear wheel, which provides for a cost-effective arrangement.

According to one embodiment said elastic V-shaped ring is formed from rubber.

According to one embodiment said elastic V-shaped ring comprises a main body, a lip and a flexible joint therebetween.

According to one embodiment said a lip of said elastic V-shaped ring is arranged to slide against a sliding surface of the first wheel arrangement.

According to one embodiment the elastic V-shaped ring comprises a lip which is arranged to slide against a radial surface, such as a radial gear wheel surface, of the first gear wheel arrangement as said gear wheel rotates. A lip of the V-shaped ring is thus in sliding contact with the gear wheel during operation of the valve actuator.

According to one embodiment the reduction gear arrangement comprises a second stationary shaft and a second gear wheel arrangement pivotally mounted thereon and a second elastic V-shaped ring which is mounted on the second stationary shaft and arranged to bias said second gear wheel arrangement.

According to one embodiment the reduction gear arrangement is a valve actuator reduction gear arrangement.

According to one aspect of the present disclosure an axial shaft seal, preferably a V-ring seal, is used for biasing a gear wheel arrangement of a valve actuator reduction gear arrangement.

By using an axial shaft seal, such as a V-ring seal, in this way noise in a valve actuator gear reduction arrangement may be reduced significantly. The use of a V-ring seal for biasing a gear wheel arrangement of a valve actuator reduction gear arrangement enables a silent actuator having one or more gear wheels made of a lightweight material, such as, e.g., plastic, i.e. gear wheels from a material which is considered to be cost-effective.

An axial shaft seal, preferably in the form of a V-ring seal, may thus be used to reduce noise in a valve actuator.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 shows, in an exploded perspective view, a reduction gear arrangement according to an embodiment of the present disclosure.
Fig. 2 shows, in a perspective view, parts of the reduction gear arrangement shown in Fig. 1.
Fig. 3 shows, in a section view, the reduction gear arrangement shown in Fig. 1.
Fig. 4 shows, in a perspective view, a valve actuating means of a valve actuator.

### Description of preferred embodiments

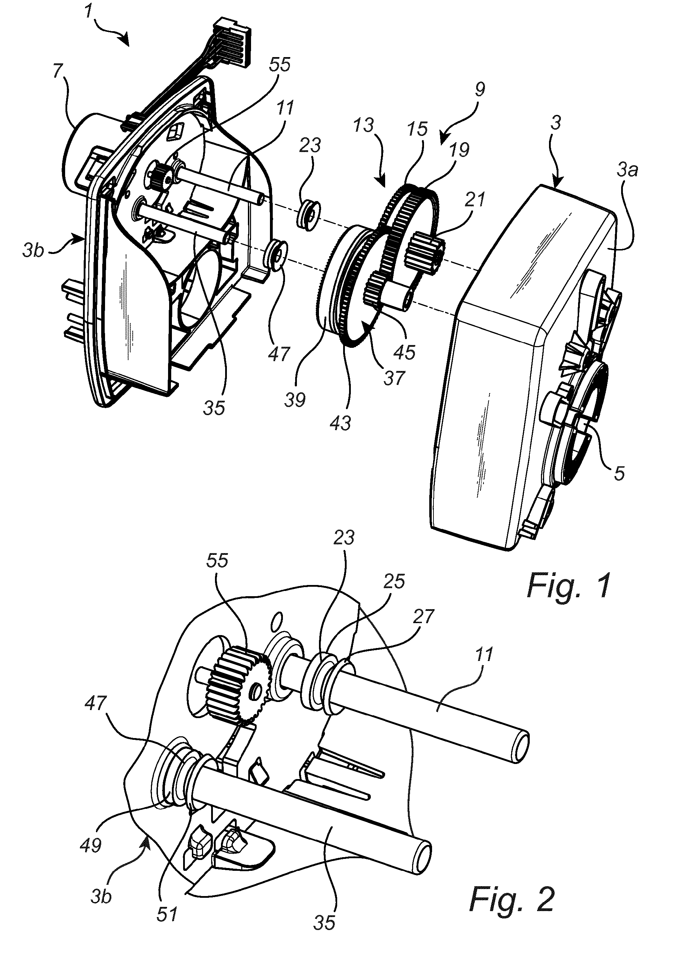

Fig. 1 shows parts of a motorized valve actuator 1 for operating a valve. The actuator 1, which is adapted to be connected to a valve stem in a known manner, comprises a housing 3 with a rear part 3a and a front part 3b. The rear part 3a is configured to be mounted on a valve plate and has an opening 5 in which the valve stem is inserted. The actuator 1 further comprises a motor 7, in the form of a synchronous motor, which is mounted to the front part 3b of the housing 3.

The valve actuator 1 further comprises a reduction gear arrangement 9 according to an embodiment of the present disclosure.

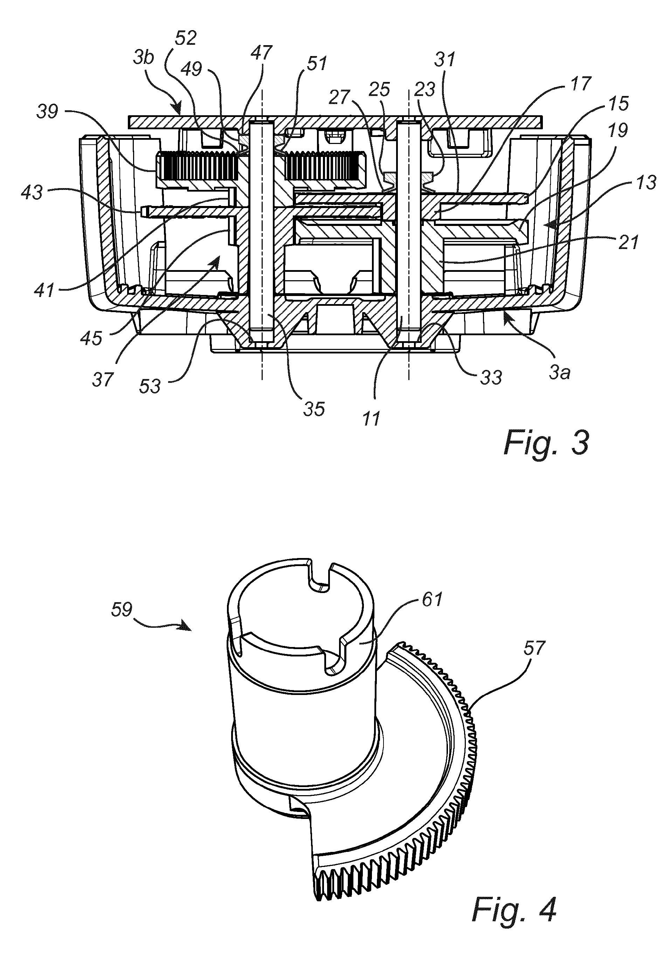

The reduction gear arrangement 9 comprises a first stationary shaft 11, which at both ends thereof is supported by the housing 3, and a first gear wheel arrangement 13 which is pivotally mounted on the first stationary shaft 11. The first gear wheel arrangement 13 comprises several gear wheels 15, 17, 19, 21, as illustrated in Figs. 1 and 3. A first 15 and a second 17 gear wheel of the first gear wheel arrangement 13 are integrally formed with each other and a third 19 and a fourth 21 gear wheel of the first gear wheel arrangement 13 are integrally formed with each other.

The reduction gear arrangement 9 further comprises an elastic V-shaped ring 23, in the form of a V-ring seal, i.e. a V-shaped axial shaft seal, which is fixedly mounted on the first stationary shaft 11 and arranged to bias the first gear wheel arrangement 13. As best illustrated in Fig. 3 the elastic V-shaped ring 23 comprises a main body 25, a lip 27 and a flexible joint therebetween. The lip 29 of the V-shaped ring 23 is in contact with a radial sliding surface 31 of the first gear wheel 15 of the first gear wheel arrangement 13. Hence, the lip 29 slides against the radial surface 31 as the gear wheels 15, 17, 19, 21 of the first gear wheel arrangement 13 rotate upon operation of the valve actuator 1. The first V-shaped ring 23 is arranged to bias the first gear wheel arrangement, i.e. the gear wheels 15, 17, 19, 21, against a supporting surface 33 of the rear part 3a of the housing 3. Hence, the fourth gear wheel 21 is in contact with the supporting surface 33 of the rear part 3a of the housing 3, as illustrated in Fig. 3.

The reduction gear arrangement 9 further comprises a second stationary shaft 35, which at both ends thereof is supported by the housing 3, and a second gear wheel arrangement 37 which is pivotally mounted on the second stationary shaft 35. The second gear wheel arrangement 37 comprises several gear wheels 39, 41, 43, 45, as illustrated in Fig. 1 and Fig. 3. A first 39 and a second 41 gear wheel of the second gear wheel arrangement 37 are integrally formed with each other and a third 43 and a fourth 45 gear wheel of the first gear wheel arrangement 13 are integrally formed with each other.

The reduction gear arrangement 9 further comprises a second V-shaped elastic ring 47, in the form of a V-ring seal, which is mounted on the second stationary shaft 35 and arranged to bias the second gear wheel arrangement 37, as illustrated in Fig. 3. The second V-shaped ring 47 is of the same type as the first V-shaped ring 23 and thus comprises a main body 49, a lip 51 and a flexible joint therebetween, as best illustrated in Fig. 2. The lip 51 of the second V-shaped ring 47 is in contact with a radial sliding surface of the second gear wheel 39 of the second gear wheel arrangement 37. Hence, the lip 51 slides against a radial surface 52 of the first gear wheel 29 of the second gear wheel arrangement 37 as the first gear wheel 39 rotates upon operation of the valve actuator 1. The second V-shaped ring 47 is arranged to bias the second gear wheel arrangement, i.e. the gear wheels 39, 41, 43, 45, against a supporting surface 53 of the rear part 3a of the housing 3. Hence, the fourth gear wheel 45 is in contact with the supporting surface 53 of the rear part 3a of the housing 3.

Each of the V-ring seals 23, 47 of the reduction gear arrangement 9 is preferably completely formed from rubber. In this embodiment commercially available V-ring seals were used.

In this embodiment the gear wheels 15, 17, 19, 21, 39, 41, 43, 45 of the first and second gear wheel arrangements 13, 37, respectively, are plastic gear wheels. It is however appreciated that other types of gear wheels may be used.

The first gear wheel 39 of the second gear wheel arrangement 37 is configured to mesh with a corresponding gear wheel 55 of the motor 7. The fourth gear wheel 21 of the first gear wheel arrangement 13 is configured to mesh with a corresponding mesh segment 57 of a valve stem rotating means 59, partly illustrated in Fig. 4, in a known manner.

The valve stem rotating means 59, which is arranged for connecting the valve actuator 1 to a rotatable valve stem of a fluid control valve, comprises a sleeve element 61 with the gear segment 57 meshing with the fourth gear wheel 21 of the first gear wheel arrangement 13. The rotation of the motor 7 is thus transmitted to the sleeve element 61 of the valve rotating means 59. The valve stem rotating means 59, which is only partly illustrated in Fig. 4, is further configured to receive a mating torque transmitting shaft end of the valve stem.

Upon installation of the first V-ring seal 23 it is stretched and mounted directly on the first stationary shaft 11. After installation the first V-ring seal 23 is held in place by the inherent elasticity of the V-ring seal 23. The V-ring 23 is thus fixed to the stationary shaft 11 and does not rotate when the gear wheels 15, 17, 19, 21 rotate during operation of the actuator 1. The first V-ring seal 23 is positioned on the stationary shaft 11 so as to apply a force to the first gear wheel 15 of the first gear wheel arrangement 13 in order to bias the first gear wheel arrangement 13 against a portion of the actuator housing 3.

Upon installation of the second V-ring seal 47 it is stretched and mounted directly on the second stationary shaft 35. After installation the second V-ring seal 35 is held in place by the inherent elasticity thereof. The V-ring 47 is thus fixed to the stationary shaft 35 and does not rotate when the gear wheels 39, 41, 43, 45 rotate during operation of the actuator 1. The second V-ring seal 47 is positioned on the stationary shaft 35 so as to apply a force to the first gear wheel 39 of the second gear wheel arrangement 37 in order to bias the second gear wheel arrangement 37 against a portion of the actuator housing 3.

Fig. 2, which illustrates the reduction gear arrangement 9 without the first and second gear wheel arrangements 13, 37, shows the first and second V-rings 23, 47, after installation thereof on the stationary shafts 11, 35, respectively.

In operation, i.e. when a valve is operated by the motor 7 via the reduction gear arrangement 9, the motor 7 may be driven in response to a temperature sensed by sensors (not shown).

Hence, a valve actuator 1 comprising the reduction gear arrangement 9 and the motor 7 may be electrically operated and intended to be connected in known manner to, for example, a temperature sensor, which regulates, with the aid of the actuator 1, the setting and rotating position of a rotatable valve shaft.

It will be appreciated that numerous variants of the embodiments described above are possible within the scope of the appended claims.

## Claims

1. Reduction gear arrangement (9) for a valve actuator (1), the reduction gear arrangement (9) comprising a first stationary shaft (11) and a gear wheel arrangement (13) pivotally mounted on said first stationary shaft (11),
**characterized in that**
the reduction gear arrangement (9) further comprises an elastic V-shaped ring (23) mounted on said first stationary shaft (11) and arranged to bias said gear wheel arrangement (13).

2. Reduction gear arrangement (9) according to claim 1, wherein said elastic V-shaped ring (23) is fixedly mounted on said first stationary shaft (11).

3. Reduction gear arrangement (9) according to claim 1, wherein said first gear wheel arrangement (13) comprises at least one plastic gear wheel (15).

4. Reduction gear arrangement (9) according any of the preceding claims, wherein said elastic V-shaped ring (23) is formed from rubber.

5. Reduction gear arrangement (9) according any of the preceding claims, wherein said elastic V-shaped comprises a main body (25), a lip (27) and a flexible joint therebetween.

6. Reduction gear arrangement (9) according to any of the preceding claims, wherein a lip (27) of said elastic V-shaped ring (23) is arranged to slide against a sliding surface (31) of the first wheel arrangement (13).

7. Reduction gear arrangement (9) according to any of the preceding claims, wherein a lip (27) of said elastic V-shaped ring (23) is arranged to slide against a radial surface (31) of a gear wheel (15) of the first gear wheel arrangement (13) as said gear wheel (15) rotates.

8. Reduction gear arrangement (9) according to any of the preceding claims, wherein the reduction gear arrangement (9) comprises a second stationary shaft (35) and a second gear wheel arrangement (37) pivotally mounted thereon and a second elastic V-shaped ring (35) which is mounted on the second stationary shaft (11) and arranged to bias said second gear wheel arrangement (37).

9. Valve actuator (1) comprising a reduction gear arrangement (9) according to any of the preceding claims

10. Use of a V-ring seal (23, 35) for biasing a gear wheel arrangement (13, 37) of a valve actuator reduction gear arrangement (9).
